# EUROPEAN PATENT APPLICATION

(11) **EP 4 844 539 A1**
(43) Date of publication of application: **25.11.2026**
(21) Application number: 25742106.5
(22) Date of filing: 02.01.2025
(51) Int. Cl.: G06F 3/01, G06N 20/00, H04W 4/80

(54) **SURGE PREVENTION DEVICE FOR PREVENTING ERRONEOUS INPUT, AND INPUT SYSTEM COMPRISING SURGE PREVENTION DEVICE**

(30) Priority: 16.01.2024 KR 20240006868
(71) Applicant: LS Electric Co., Ltd., Anyang-si, Gyeonggi-do 14119 (KR)
(72) Inventor: KANG, Sunghee, Anyang-si, Gyeonggi-do 14118 (KR)
(74) Representative: K&L Gates LLP
(86) International application number: PCT/KR2025/000047
(87) International publication number: WO 2025/155007

(57) **Abstract**

The present invention relates to a surge prevention device disposed between an input unit for receiving an input and a processing unit for processing the input, the device comprising: a first counter that accumulates a counting value whenever a signal having a preset specific voltage or higher is detected at the input unit; a second counter that accumulates a counting value at regular intervals when no signal below the preset specific voltage is detected at the input unit, and is reset when a signal having the preset specific voltage or higher is detected; and a control unit which controls the first counter such that the counting value of the first counter is held, when the counting value accumulated in the first counter reaches a preset first threshold value, and which activates an output unit to output an input signal to the processing unit, when a signal having a voltage higher than or equal to a preset threshold voltage is detected while the counting value of the first counter is held.

## Description

### Technical Field

The present disclosure relates to a device and an input system for preventing an erroneous input due to a surge.

### Background Art

In general, when an input device receives an input from a user or other devices, the input device converts the received input into a designated electrical signal and transmits it to a processing part. Furthermore, the processing part processes the input converted into an electrical signal, thereby allowing a function according to the input to be performed.

Here, the electrical signal can typically be a voltage. That is, the input device inputs the received input as a signal having a specific voltage, and the processing part performs a corresponding function when a signal having the specific voltage is detected from the input device.

However, when a voltage signal having a specific voltage is received and processed as an input signal, there is a problem in that an erroneous input can occur for a voltage noise such as a surge.

For example, a surge can refer to a voltage or current that is applied rapidly for only a predetermined time period and then naturally decays. Such a surge can occur when there is atmospheric instability (e.g., lightning discharge surge, induced lightning surge, electrostatic discharge, etc.) such as lightning or thunderstorm, and can also occur due to a switching operation (e.g., switching surge, noise, etc.) in the circuit. Since such a surge has a voltage above the specific voltage for even a short time period, there is a problem in that in the event of the surge, the processing part can mistake the voltage generated by the surge for an input signal and process it as an input even though the input device has not sent an input signal. That is, there is a problem in that the processing part can malfunction due to a surge.

Accordingly, a surge protection method is being actively studied to distinguish a noise voltage generated due to a surge from an input signal.

Moreover, there is a difference in that an AC input device also uses an AC voltage signal as an input signal, but a DC input device uses a DC voltage signal as an input signal. In addition, in the case of an AC signal, the polarity alternates at regular intervals, but in the case of a DC signal, the polarity does not alternate, so the AC input signal and the DC input signal have different characteristics. Therefore, there is a problem in that a surge prevention device that can be used in an AC input device is difficult to use in a DC input device, and a surge prevention device that can be used in a DC input device is difficult to use in an AC input device.

### Disclosure of Invention

### Technical Problem

The present disclosure aims to solve the aforementioned problems and other problems, and an aspect of the present disclosure is to provide a surge prevention device that can prevent a processing part from malfunctioning due to a noise voltage such as a surge, and an input system including the device.

In addition, an aspect of the present disclosure is to provide a surge prevention device that can be mixed with not only an AC input device using an AC input signal but also a DC input device using a DC input signal, and an input system including the device.

### Solution to Problem

In order to achieve the foregoing or other objectives, according to an aspect of the present disclosure, a surge prevention device according to an embodiment of the present disclosure arranged between an input part that receives an input and a processing part that processes the input can include a first counter in which a counting value is accumulated whenever a signal above a preset specific voltage is detected from the input part; a second counter in which a counting value is accumulated at preset time periods when a signal below the specific voltage is not detected from the input part, and is initialized when a signal above the specific voltage is detected; and a control part that controls the first counter so as to allow the counting value of the first counter to be held when the counting value accumulated in the first counter reaches a preset first threshold value, and activates an output part to output an input signal to the processing part when a signal having a voltage above a preset threshold voltage is detected while the counting value of the first counter is held.

In one embodiment, the control part can deactivate the output part to limit an input signal output to the processing part when the counting value of the second counter reaches a preset second threshold value while the counting value of the first counter is held.

In one embodiment, the control part can initialize the first counter when the accumulated counting value of the second counter reaches a preset second threshold value.

In one embodiment, the control part can change the first threshold value to vary a time period required for the counting value of the first counter to reach the first threshold value so as to vary a time period until the output part is activated subsequent to detecting a signal above the specific voltage.

In one embodiment, the control part can change a magnitude of the first threshold value based on a result of collecting environmental information related to a surge around the surge prevention device, wherein the environmental information related to the surge includes at least one of temperature, humidity, and an amount of ventilation around the surge prevention device.

In one embodiment, the control part can predict a magnitude of surge energy that can be generated when a surge occurs based on environmental information related to the surge, and change the magnitude of the first threshold value based on the predicted magnitude of the surge energy.

In one embodiment, the surge prevention device can further include a communication part capable of communicating with a preset external server, wherein the control part predicts the magnitude of the surge energy from the environmental information related to the surge based on a pre-trained surge prediction model capable of predicting the magnitude of surge energy at the time of surge occurrence based on the environmental information related to the surge, and the surge prediction model is received from a machine learning server connected through the communication part.

In one embodiment, the control part can collect the environmental information related to the surge from at least one external server connected through the communication part.

In one embodiment, the input part can be a DC input part that inputs a DC input signal in which a voltage having a predetermined magnitude is continuously applied for a predetermined time period, wherein the processing part is a DC input processing part that receives the DC input signal as an input signal to perform a corresponding function.

In one embodiment, the input part can be an AC input part that inputs an AC input signal in which voltages of opposite polarities alternate at predetermined time intervals, and the processing part can be an AC input processing part that receives the AC input signal as an input signal to perform a corresponding function.

In order to achieve the foregoing or other objectives, according to an aspect of the present disclosure, an input system according an embodiment of the present disclosure can include an input part that outputs an input received from a user or another device as an input signal having a specific voltage; a processing part that performs, upon receiving an input signal, processing according to the received input signal; and a surge prevention part arranged between the input part and the processing part to activate, when a signal above a preset specific voltage is detected from the input part, a deactivated output part to output the input signal to the processing part, wherein the surge prevention part delays, when a signal above the specific voltage is detected, a time point at which the output part is activated based on an accumulated time period for which a signal above the specific voltage is detected or a counting value that counts a number of times a signal above the specific voltage is detected.

In one embodiment, the surge prevention part can include a first counter in which a counting value is accumulated whenever a signal above a preset specific voltage is detected from the input part; a second counter in which a counting value is accumulated at preset time periods when a signal below the specific voltage is not detected from the input part, and is initialized when a signal above the specific voltage is detected; and a control part that controls the first counter so as to allow the counting value of the first counter to be held when the counting value accumulated in the first counter reaches a preset first threshold value, and activates the output part when a signal above the specific voltage is detected from the input part while the counting value of the first counter is held.

In one embodiment, the surge prevention part can deactivate, when the accumulated counting value of the second counter reaches a preset second threshold value while the counting value of the first counter is held, the output part.

In one embodiment, the surge prevention part can maintain, when a signal above the specific voltage is not detected from the input part while the counting value of the first counter is held, the output part in a deactivated state.

In one embodiment, the surge prevention part can initialize, when the accumulated counting value of the second counter reaches a preset second threshold value, the first counter.

In one embodiment, the input part can be a DC input part that inputs a DC input signal in which a voltage having a predetermined magnitude is continuously applied for a predetermined time period, wherein the processing part is a DC input processing part that receives the DC input signal as an input signal to perform a corresponding function.

In one embodiment, the input part can be an AC input part that inputs an AC input signal in which voltages of opposite polarities alternate at predetermined time intervals, wherein the processing part is an AC input processing part that receives the AC input signal as an input signal to perform a corresponding function.

### Advantageous Effects of Invention

According to at least one of embodiments of the present disclosure, when a voltage signal is received, the present disclosure delays a predetermined time period for which a surge naturally decays, and determines whether the voltage signal is a valid input or not based on whether a voltage signal above a specific voltage is continuously received even after the predetermined time period has been delayed. Accordingly, the present disclosure ensures that a noise voltage that naturally decays over time, such as a surge, is not processed as a valid input, thereby having an effect capable of preventing a malfunction of a processing part due to the noise voltage.

In addition, according to one of embodiments of the present disclosure, the present disclosure allows a predetermined time period for which the surge naturally decays to be determined by using a first counter in which a value is accumulated at preset time periods or whenever consecutive inputs are generated and a second counter in which a value is initialized when there is an input and accumulated at preset time periods when there is no input. As such, since the present disclosure uses an accumulation counter, it has an effect that can be used in both a DC input device that receives an DC input in which a voltage is continuously generated, and an AC input device that receives an AC input in which voltage signals for a short time period are consecutively generated.

### Brief Description of Drawings

FIG. 1A is a block diagram for explaining a structure of an input system including a surge prevention device according to an embodiment of the present disclosure.
FIG. 1B is a block diagram showing a configuration of a surge prevention device according to an embodiment of the present disclosure.
FIGS. 2A and 2B are flowcharts showing an operation process of determining, by a surge prevention device according to an embodiment of the present disclosure, whether to activate an input.
FIG. 3 is a flowchart showing an operation process of optimizing, by a surge prevention device according to an embodiment of the present disclosure, a digital input activation limit time period according to environmental information.
FIG. 4 is an exemplary diagram showing an example of processing, by a surge prevention device according to an embodiment of the present disclosure, a voltage due to a surge that has occurred as an invalid input.
FIG. 5 is an exemplary diagram showing an example of processing, by a surge prevention device according to an embodiment of the present disclosure, an AC input signal as an input signal in an AC input device.
FIG. 6 is an exemplary diagram showing an example of processing, by a surge prevention device according to an embodiment of the present disclosure, a DC input signal as an input signal in a DC input device.

### Mode for the Invention

It should be noted that technical terms used herein are merely used to describe a specific embodiment, but are not intended to limit the present disclosure. In addition, a singular expression used herein can include a plural expression unless clearly defined otherwise in the context. As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto can unnecessarily obscure the subject matter disclosed herein, the detailed description will be omitted.

Hereinafter, embodiments disclosed herein will be described in detail with reference to the accompanying drawings.

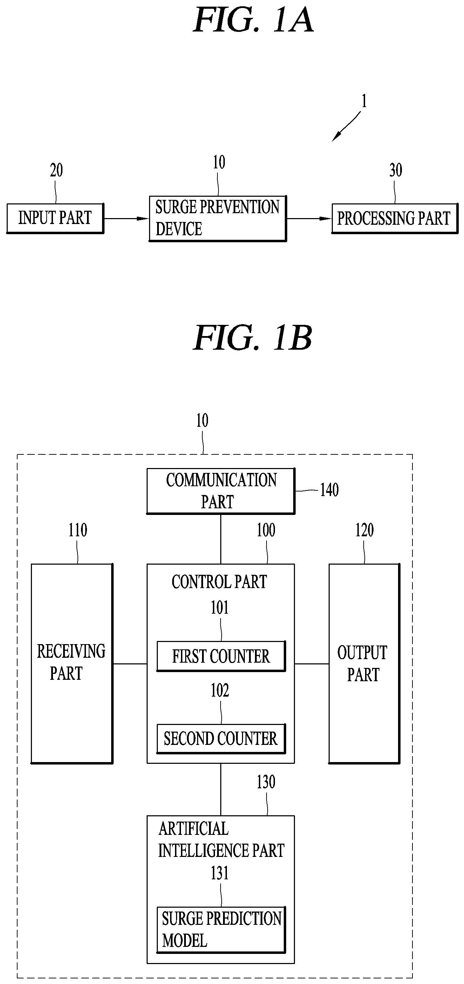

FIG. 1A is a block diagram for explaining a structure of an input system 1 including a surge prevention device 10 according to an embodiment of the present disclosure, and FIG. 1B is a block diagram showing a configuration of the surge prevention device 10 according to an embodiment of the present disclosure.

Referring to FIG. 1A, the input system 1 including the surge prevention device 10 according to an embodiment of the present disclosure can be configured to include an input part 20 that receives an input from a user or other device, and a processing part 30 that receives a voltage signal corresponding to the received input from the input part 20 as an input signal to perform a corresponding function. For example, the input part 20 can be formed to include a switch that receives an input from a user, and the processing part 30 can be a micro controller unit (MCU) or central processing unit (CPU) that processes a function according to the input of the input part 20.

The surge prevention device 10 can be arranged between the input part 20 and the processing part 30 as shown in FIG. 1A. When arranged in this manner, the input of the input part 20 can be received by the surge prevention device 10, and the surge prevention device 10 can output an input signal corresponding to the received input when the received input is valid. Furthermore, the processing part 30 can receive an input signal output from the surge prevention device 10 and perform a function according to the received input signal. That is, the input signal may be allowed to be received by the processing part 30 through the surge prevention device 10 that filters whether the signal is a valid input at the input part 20, thereby preventing the processing part 30 from performing a malfunction due to an unintended signal, that is, a noise voltage such as a surge.

Meanwhile, referring to FIG. 1B, when describing the configuration of the surge prevention device 10 that filters whether the input signal is valid, the surge prevention device 10 can be configured to include a control part 100, a receiving part 110 connected to the control part 100 and controlled by the control part 100, and an output part 120.

First, the receiving part 110 is connected to the input part 20 to detect a voltage applied from a side of the input part 20 as an input. In this case, the input applied from the side of the input part 20 can be generated by an input signal actually input through the input part 20. Alternatively, when a voltage fluctuation in a circuit occurs due to a surge or the like, an input due to such a noise voltage can be detected by the receiving part 110.

Furthermore, the output part 120 can be connected to the processing part 30 to output an input signal to the processing part 30 according to the control of the control part 100. That is, the output part 120 can activate or deactivate an output of the input signal according to the control of the control part 100. Furthermore, when the input signal output of the surge prevention device 10 is activated, the input signal can be transmitted to the processing part 30. On the other hand, when the input signal output of the surge prevention device 10 is deactivated, the input signal can not be transmitted to the processing part 30.

Meanwhile, the control part 100 can distinguish an input detected by the receiving part 110 as an input signal or a noise voltage such as a surge. To this end, when a voltage above a specific voltage is detected by the receiving part 110, the control part 100 can check whether the voltage above the specific voltage is continuously maintained for a predetermined time period or more.

Here, the predetermined time period can be a time period required for surge energy to naturally decay to below the specific voltage in the event of a surge. The predetermined time period can be a time period required for surge energy to naturally decay below the specific voltage in a surge that typically occurs according to multiple surge generation experiments performed in advance in relation to the surge prevention device 10 according to an embodiment of the present disclosure.

As a result of the check, when a voltage above the specific voltage is continuously maintained for a predetermined time period or more, the control part 100 can determine that the input detected by the receiving part 110 is based on an input actually input from the input part 20. Furthermore, the output part 120 may be controlled to activate the output part 120, thereby transmitting the input signal to the processing part 30.

On the other hand, as a result of the check, when a voltage above the specific voltage is not continuously maintained for a predetermined time period or more, the control part 100 can determine that the input detected by the receiving part 110 is due to a noise voltage such as a surge. Furthermore, a deactivated state of the output part 120 may be maintained, thereby blocking a signal according to the noise voltage from being transmitted to the processing part 30.

However, in the case of a DC input signal in which a voltage above a specific voltage is continuously applied for a predetermined time period or more, an input by a noise voltage can be blocked simply by checking whether the voltage above the specific voltage is continuously maintained for a predetermined time period or more as described above. However, in the case of an AC input signal in which a polarity of a voltage is switched at preset time intervals, an input signal has the form of a pulse wave (or square wave) having a specific voltage at predetermined intervals, so time periods in which no voltage is applied can be included in the middle of the input signal. Accordingly, there is a problem in that it is difficult to distinguish between an AC input signal and a signal due to a noise voltage using the same method as described above.

Accordingly, the control part 100 can check whether a signal above the specific voltage is maintained for the predetermined time period or more by using two accumulation counters in which values are accumulated when a preset condition is satisfied.

First, the first counter 101, which is a counter whose value increases when a voltage is detected, that is, when there is an input received through the receiving part 110, can be an accumulation counter in which counting is performed at preset time periods when there is an input or whenever consecutive inputs are generated, and its value is continuously accumulated. Here, the input can refer to a voltage that can be determined as a valid input, that is, an input above a specific voltage. Furthermore, the control part 100 can control the first counter 101 so as to allow the accumulated value of the first counter 101 to be held when the counting value of the first counter 101 reaches a predetermined amount.

Here, controlling the counter to be held can refer to maintaining a current value without further increasing the accumulated counting value of the first counter 101.

On the other hand, the second counter 102, which is a counter whose value increases when there is no input, can be an accumulation counter in which its value is initialized when an input is detected, and counting is performed at preset time periods when no input is detected and its value is continuously accumulated. Here, the input can refer to an input above a predetermined voltage. Furthermore, the control part 100 can control the second counter 102 so as to be held when the counting value of the second counter 102 reaches a predetermined amount.

As described above, the first counter 101 increases its counting value when there is an input, so the value of the first counter 101 can increase when an input signal or an input due to a surge is detected. On the other hand, the second counter 102 can increase in value while there is no input, and can be initialized when the input, that is, a voltage input through the receiving part 110, is detected.

Furthermore, when the input continues, the value of the first counter 101 can continue to increase. Alternatively, since it is an accumulation counter, in the case of a pulse wave (or square wave) that periodically has a specific voltage according to an AC input signal, its value can be maintained during a time period in which there is no input having the specific voltage, and accumulated and increased during a time period in which there is an input having the specific voltage.

The control part 100 can hold the first counter 101 when the accumulated value of the first counter 101 reaches a preset first threshold value.

Furthermore, the control part 100 can check whether an input having a voltage above a preset threshold voltage is received through the receiving part 110 while the counting value of the first counter 101 is held.

Furthermore, while the first counter 101 is held, when there is an input having a voltage above the preset threshold voltage, the control part 100 can determine that this is a valid input signal and activate the output part 120 so as to allow the input signal to be output (output activation).

On the other hand, as a result of the check, while the first counter 101 is held, when a voltage having a voltage above the threshold voltage is not detected, or when a voltage input through the receiving part 110 is not detected (e.g., an input signal according to an AC signal), the value of the second counter 102 can be gradually increased in proportion to a time period during which the voltage, that is, the input, is not detected. Furthermore, the control part 100 can initialize the first counter 101 based on whether the accumulated value of the second counter 102 reaches a preset threshold value (hereinafter, a second threshold value).

That is, the control part 100 can initialize the first counter 101 when the counting value of the second counter 102 reaches the second threshold value. That is, the second counter 102 can be a counter for initializing the held first counter 101. In this case, the value of the first counter 101 can be initialized to 0.

Furthermore, when the first counter 101 is initialized based on the accumulated value of the second counter 102, the control part 100 can switch the output part 120 to a deactivated state. Alternatively, when the output part 120 is already in a deactivated state, it can continue to maintain the deactivated state (output deactivation). Therefore, even though the output part 120 is activated to output a valid input signal, the output part 120 can be deactivated again when the input is interrupted and a time period elapses until the accumulated counting value of the second counter 102 reaches the second threshold value.

Meanwhile, even though a valid input (an input having a voltage above a threshold voltage) is interrupted, when the valid input is generated again before the second counter 102 reaches the second threshold value, that is, the margin time period, the second counter 102 can be initialized again before the accumulated counting value reaches the second threshold value. Therefore, the output part 120 can be activated to continuously maintain a state in which a valid input signal is output to the processing part 30. Therefore, when an input signal is formed in the form of a pulse, such as an AC input signal, the second counter 102 is initialized whenever an input signal is detected intermittently, and accordingly, an output of the output part 120 can be maintained in an activated state.

Meanwhile, when a voltage is detected through the receiving part 110, the value of the first counter 101 can be accumulated over time to control the output part 120 so as not to allow the output part 120 to be activated until the accumulated value of the first counter 101 reaches a first threshold value. Furthermore, when the voltage is continuously detected even after a time period elapses until the counting value accumulated in the first counter 101 reaches the first threshold value, if the voltage is above a preset threshold voltage, it can be determined as a valid input to control the output part 120 (activate the output part 120) so as to allow the input signal to be output to the processing part 30. Therefore, when a noise voltage, such as a surge that disappears within a predetermined time period due to natural decay, occurs, the transmission of an erroneous input signal caused by the noise voltage to the processing part 30 can be blocked by a time period during which the counting value of the first counter 101 is accumulated.

In addition, as described above, the first counter 101 and the second counter 102 of the present disclosure can be accumulation counters in which the counting value is accumulated and increased when a preset condition is satisfied. Therefore, it can be applied to not only to a DC input signal that continuously generates an input but also an AC input signal that consecutively generates input signals having a specific voltage in the form of a pulse wave.

Meanwhile, as described above, the present disclosure can limit the output until the accumulated counting value of the first counter 101 reaches a first threshold value when a voltage received from the input part 20 is detected. That is, the output can be limited until the counting value of the first counter 101 reaches the first threshold value. Here, a time period during which the output is limited according to the counting value of the first counter 101 can be a time period corresponding to a time period during which surge energy naturally decays when the detected voltage is a surge. That is, the present disclosure described above is based on the premise that surge energy naturally decays within a time period until the counting value of the first counter 101 reaches a first threshold value.

However, in the case of a surge, its magnitude is not constant and varies greatly. Furthermore, as it is also affected by environments such as a lightning strike or thunderstorm, as well as by humidity, temperature, or static electricity, the surge can have a wide range of magnitudes, and accordingly, the duration of its energy can also vary widely. Therefore, when a time period is too short until the counting value of the first counter 101 reaches the first threshold value, there is a problem that noise can be determined as a valid input due to a voltage that has not naturally decayed, and when a time period is too long until the counting value of the first counter 101 reaches the first threshold value, there can be a problem that a delay time increases from when an actual input signal is input until the processing part 30 receives the input signal to perform a corresponding function.

Accordingly, it is necessary to set an optimized time period until the counting value of the first counter 101 reaches the first threshold value. To this end, in the foregoing description, based on statistical data obtained from a plurality of tests related to the present disclosure, the first threshold value may be adjusted, thereby determining a time period until the counting value of the accumulated first counter 101 reaches the first threshold value, that is, a time period during which the output is limited when an input signal is applied. In this case, the first threshold value can of course be adaptively determined based on various environmental factors surrounding the input system 1 including the surge prevention device 10.

To this end, the surge prevention device 10 according to an embodiment of the present disclosure can further include an artificial intelligence part 130 including a surge prediction model 131 capable of predicting a magnitude of surge energy based on a surrounding environmental condition. Furthermore, the control part 100 can determine the first threshold value differently based on a magnitude of surge energy predicted by the artificial intelligence part 130, thereby optimizing a time period during which the output of the output part 120 is limited according to the expected magnitude of a surge.

The artificial intelligence part 130 performs the role of processing information items based on artificial intelligence technology, and can include one or more modules that perform at least one of training information, inferring information, and perceiving information.

The artificial intelligence part 130 can train a magnitude of surge energy generated when a surge occurs in various environmental situations by using machine learning technology. For example, based on a deep learning model on the basis of information items trained using machine learning technology, the artificial intelligence part 130 can infer at least one different environmental situation with different probability vectors that can predict a change in magnitude of surge energy, or the like. Here, the probability vector inferred through the deep learning model can be a probability value of a surge energy magnitude determined according to at least one different environmental variable.

Here, training can be performed through the machine learning technology. The machine learning technology is a technology of collecting and training large-scale information items based on at least one algorithm, and determining and predicting information based on the trained information. Training information is an operation of identifying features, rules, and determination criteria of information items, quantifying a relationship between information items, and predicting new data using a quantified pattern.

The deep learning technology is a technology that performs at least one of training, determining, and processing information items using an artificial neural network model. The artificial neural network can have a structure that connects layers (hidden layers) and transmits data between layers. In this case, the artificial intelligence part 130 can use a convolutional neural network (CNN) model to infer probability vectors for the different environment variables.

Meanwhile, the deep learning model can be a random forest model that includes decision trees trained using the class-specific probability vectors as decision elements. Here, the decision tree can be a prediction model with a tree structure in which the magnitude of the surge energy predicted based on specific environmental situations (environmental variables) is trained, and can be a model that determines which class (e.g., different surge energies) a plurality of class-specific probability vectors having different values correspond to based on the trained results. Furthermore, the random forest model, which is a model including a plurality of decision trees, can be a machine learning model that ensembles the results determined from each of the plurality of decision trees to infer any one result. Hereinafter, the trained deep learning model will be referred to as a surge prediction model.

Meanwhile, in order for the artificial intelligence part 130 to predict surge energy according to a surrounding environment condition using the surge prediction model 131, the surge prevention device 10 can further include a communication part 140 capable of collecting information on the surrounding environment conditions.

The communication part 140 can communicate wirelessly or wired with at least one device capable of sensing environmental information around the input system 1, for example, a sensor device such as a thermometer or a hygrometer. Alternatively, the communication part 140 can communicate with an external server that provides environmental information around the input system 1.

Here, the external server can be a weather information providing server that provides weather information around the input system 1 or an environment management server that manages an indoor environment in which the input system 1 is arranged. In this way, the control part 100 can collect information on humidity, temperature, ventilation or air condition around the input system 1 through wireless communication with a weather information providing server or an environment management server, and utilize the collected information as input information for surge prediction of the artificial intelligence part 130. Furthermore, a first limit value can be determined differently based on a surge energy magnitude prediction result of the artificial intelligence part 130, thereby preventing a malfunction of the processing part 30 that can occur due to a surge amplified by surrounding environmental requirements.

Meanwhile, herein, the artificial intelligence part 130 and the control part 100 can be understood as the same element. In this case, a function performed by the control part 100 described herein can be expressed as being performed by the artificial intelligence part 130, and the control part 100 can be referred to as the artificial intelligence part 130. Alternatively, vice versa, the artificial intelligence part 130 can be referred to as the control part 100.

Hereinafter, the foregoing operation of the control part 100 described in FIG. 1B will be described in more detail with reference to a flowchart.

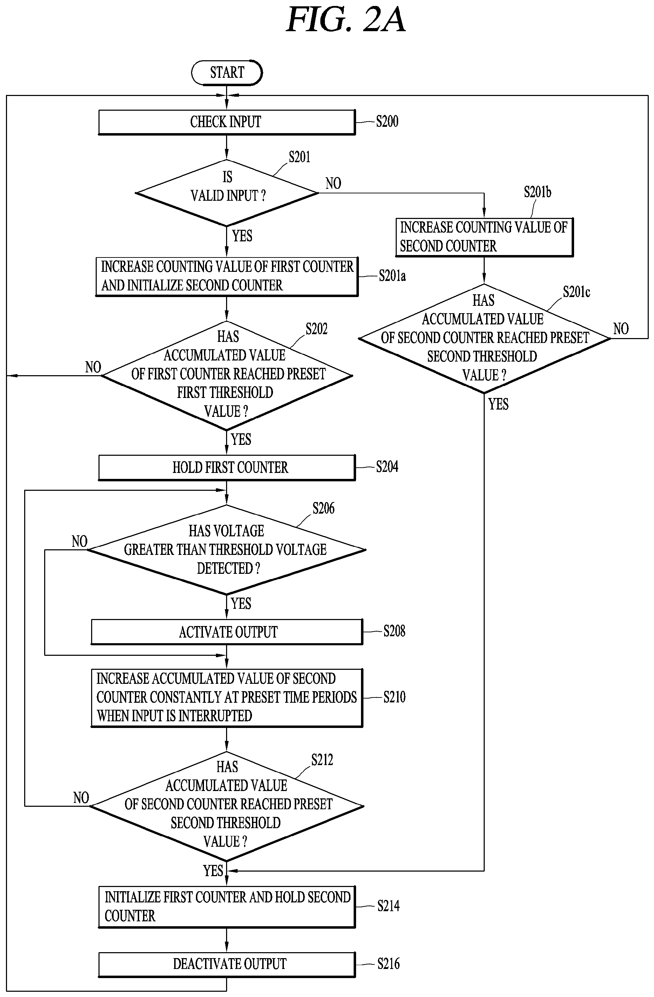

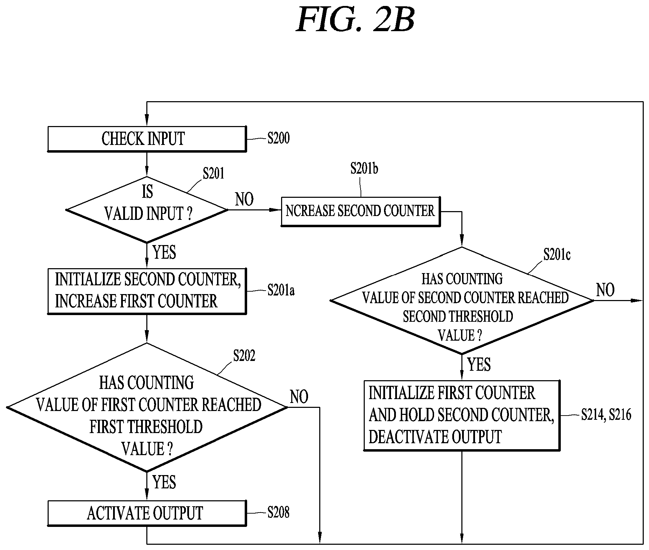

FIGS. 2A and 2B are flowcharts showing an operation process of determining, by the control part 100 of the surge prevention device 10 according to such an embodiment of the present disclosure, when there is an input received from the input part 20, whether to activate the input.

First, referring to FIG. 2A, the control part 100 of the surge prevention device 10 can check whether a valid input is received through a voltage detected through the receiving part 110 (S200). In this case, the control part 100 can determine that a valid input has been received when the voltage detected through the receiving part 110 is above a preset threshold voltage (e.g., 3.3V).

When the input detected as a result of the determination in the step S200 is invalid, the control part 100 can increase a counter value of the second counter 102 (S201b). Furthermore, it can be checked whether the increased counting value of the second counter 102 has reached a preset second threshold value (S201c). Furthermore, the first counter 101 can be initialized according to a result of the check in step S201c. Furthermore, the second counter 102 can be held when the counting value reaches the second threshold value (S214).

Furthermore, when the first counter 101 is initialized and the second counter 102 is held, the output part 120 can be controlled to be deactivated again (S216). Furthermore, the process proceeds again to the step S200 to check whether a valid input is received. In addition, when the counting value of the second counter 102 in the step S201c does not reach a preset second threshold value, the process can also proceed to the step S200 to check again whether a valid input is received.

On the other hand, when a valid input is received as a result of the determination in the step S200, the control part 100 can increase the counting value of the first counter 101. Furthermore, the second counter 102 can be initialized (S201a). Accordingly, when a voltage above the threshold voltage is detected by the receiving part 110, the counting value of the first counter 101 can be increased at a constant rate at preset time periods or whenever consecutive voltages are detected. At the same time, the control part 100 can initialize the second counter 102 because a voltage is currently detected, that is, there is an input.

Furthermore, the control part 100 can check whether the accumulated counting value of the first counter 101 has reached a preset first threshold value (S202). Furthermore, when the accumulated counting value of the first counter 101 does not reach the preset first threshold value as a result of the check, the output part 120 can be not activated and the process can proceed to step S200 again.

In this case, when a voltage is detected through the receiving part 110 in the step S200 (e.g., a voltage according to a DC input signal), the control part 100 can increase the counting value of the first counter 101 in the step S200. In this case, since there is an input, the second counter 102 can maintain an initialization state.

On the other hand, when no voltage is detected (e.g., a time period between inputs during a pulse wave input according to the AC input signal), the counting value of the first counter 101 can not be increased. Then, the value of the first counter 101 can maintain its current state. On the other hand, since there is no input, the value of the second counter 102 can be increased.

Furthermore, the control part 100 can proceed again to the step S202. Furthermore, depending on a result of the check in step S202, when the counting value of the first counter 101 does not reach the first threshold value, the process can proceed again to step S200.

As such, while repeating steps S200 and S202, the value of the first counter 101 can be gradually increased in both cases where a voltage is continuously detected (DC input signal) and where a voltage is intermittently detected (AC input signal). On the other hand, the second counter 102 maintains an initial state in the case of a DC input signal, but the value of the second counter 102 can be increased and then initialized again in the case of an AC input signal in which a voltage is detected intermittently.

Meanwhile, when the accumulated counting value of the first counter 101 reaches a preset first threshold value, the control part 100 can hold the first counter 101 to stop counting of the first counter 101 (S204). Then, the first counter 101 can maintain the counting value accumulated up to now.

When the counting of the first counter 101 is stopped, the control part 100 can check whether a voltage above a preset threshold voltage is detected through the receiving part 110 (S206). Furthermore, when a voltage above the threshold voltage is detected as a result of the check in the step S206, the control part 100 determines the detected voltage as a valid input signal to activate the output part 120 in a deactivated state (S210). Then, the output part 120 can output the received valid input signal to the processing part 30 (output activation).

Meanwhile, while the first counter 101 is held, when a voltage above the threshold voltage is not detected through the receiving part 110, that is, when the reception of a valid input signal is interrupted, the counting value of the second counter 102 can be increased (S210). Here, the second counter 102 can be a counter in which its value is initialized when there is a voltage detected by the receiving part 110 as described above, and accumulated when there is no detected voltage. Therefore, when the valid input signal is no longer received, the counting value can be accumulated according to a length of a time period during which the input signal is not received.

Then, the control part 100 can check whether the counting value of the accumulated second counter 102 has reached a preset second threshold value (S212). Furthermore, when the accumulated counting value of the second counter 102 does not reach the preset second threshold value as a result of the check in the step S212, the process can proceed to step S206 again to check whether the valid input, that is, an input having a voltage greater than the threshold voltage, has been detected from the receiving part 110. Furthermore, as a result of the check in the step S206, when an input having a voltage greater than the threshold voltage is detected, the second counter 102 is initialized again, and the process proceeds to the step S208 to activate the output.

However, as a result of the check in the step S206, when an input having a voltage greater than the threshold voltage is not detected, the process proceeds back to the step S210 above, and the counting value of the second counter 102 can be increased again in the step S210.

When the counting value of the second counter 102 increases in the step S210, the control part 100 can proceed to step S212 again to check whether the counting value of the second counter 102 that has increased again has reached the second threshold value.

As a result of the check in the step S212, when the accumulated counting value of the second counter 102 reaches the second threshold value, the control part 100 can initialize the first counter 101 that has been maintaining a held state. Furthermore, the second counter 102 can be held when the counting value reaches the second threshold value (S214). Furthermore, when the first counter 101 is initialized, the output part 120 can be controlled to deactivate the output part 120 again (S216). In this case, when the process does not proceed to step S208 based on a result of the check in the step S206, that is, when the output part 120 is not in an activated state, the control part 100 can maintain the deactivated state of the output part 120 as it is.

Accordingly, when the reception of a valid input is interrupted while receiving the valid input, the output part 120 can be maintained in an activated state from a time point at which the counting value of the first counter 101 reaches a first threshold value until the counting value of the second counter 102 reaches a second threshold value subsequent to interrupting the reception of the valid input. Furthermore, when the received input is an invalid input, that is, a voltage noise due to a surge or the like, the output part 120 is maintained in a deactivated state from a time point at which the input is received until the counting value of the first counter 101 reaches the first threshold value, thereby preventing an erroneous input due to the voltage noise from being output to the processing part 30 as the surge naturally decays during that time period.

In addition, in the case of an input signal in which a specific voltage is input intermittently, such as an AC input signal having a pulse wave form, the step S208 in which the output part 120 is activated can be omitted while the voltage is not detected and the process can proceed to the step S210. Therefore, the counting value of the second counter 102 can be increased. However, in the case of an AC input signal, since the time between when the voltage is applied and when the voltage is not applied is not long, the voltage can be detected again before the accumulated counting value of the second counter 102 reaches the second threshold value.

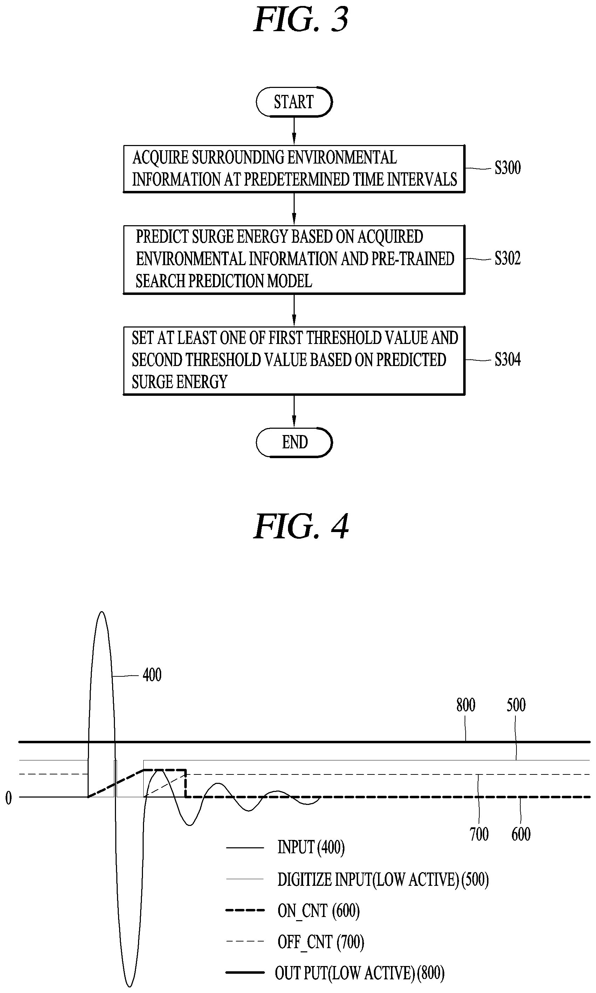

Then, the control part 100 can proceed from step S206 to step S208, and accordingly, the output part 120 can be activated. Furthermore, since the voltage is detected, the second counter 102 can be initialized again according to the characteristics of the second counter 102. Examples of blocking a malfunction caused by a voltage noise such as a surge, determining a valid input signal, and activating a digital input according to the operation of the first and second counters 101, 102 will be described in more detail with reference to FIGS. 4 to 6 below.

Meanwhile, FIG. 2B is a brief description showing operation processes for controlling the first counter 101 and the second counter 102 among the steps of FIG. 2A.

Referring to FIG. 2B, the control part 100 can determine whether a voltage detected in steps S200 and S201 is a valid input by comparing it with a threshold voltage. Furthermore, when a voltage corresponding to a valid input is not detected as a result of the determination, the counting value of the second counter can be increased (S201b), and when a voltage corresponding to a valid input is detected, the second counter can be initialized and the counting value of the first counter can be increased (S201a).

Furthermore, when proceeding to the step S201b, the control part 100 can proceed to step S201c to check whether the counting value of the second counter 102 has reached the second threshold value. Furthermore, when the counting value of the second counter 102 reaches the second threshold value, the process can proceed to steps S214 and S216 to initialize the first counter 101, hold the second counter 102, and deactivate the output part 120. Furthermore, the process can proceed to checking an input in step S200 to detect a voltage of an input signal received from the receiving part 110, and proceed to step S201 to determine whether it is valid. Meanwhile, when the counting value of the second counter 102 in step S201c does not reach the second threshold value, the process can proceed directly to step S200.

Meanwhile, as a result of the determination in the step S201, when the second counter 102 is initialized and the counting value of the first counter 101 is increased in the step S201a as a valid input is received, the control part 100 can proceed to step S202 to check whether the counting value of the first counter 101 has reached a first threshold value. Furthermore, depending on a result of the check, the process can proceed to step S204 to hold the first counter 101. Furthermore, the process can activate the output part 120 (S208), proceed to checking an input in step S200 to detect a voltage of an input signal received from the receiving part 110, and proceed to step of S201 to determine whether it is valid, or proceed directly to step S200 without activating the output part 120.

Meanwhile, according to the foregoing description, it has been mentioned that the surge prevention device 10 according to an embodiment of the present disclosure can predict a magnitude of surge energy using a surge prediction model and adjust a time period for limiting digital input activation according to the predicted magnitude of the surge energy, that is, a time period until the accumulated counting value of the first counter 101 reaches a first threshold value.

FIG. 3 is a flowchart showing an operation process of optimizing, by the surge prevention device 10 according to an embodiment of the present disclosure, a time period during which the digital input activation is limited according to a surrounding environmental condition by utilizing the artificial intelligence part 130.

Referring to FIG. 3, the control part 100 of the surge prevention device 10 can acquire environmental information around the input system 1 at predetermined time intervals (S300). Here, the environmental information around the input system 1 can be information such as humidity or temperature, weather, current time, season, wind or air pressure, and thunderstorms that can affect the magnitude of surge energy in the event of a surge. In order to acquire such environmental information, the control part 100 can control the communication part 140 to perform a communication connection with at least one server that provides weather information, and acquire the aforementioned environmental information through the communication connection.

Here, the environmental information can be indoor environmental information that manages an indoor environment in which the input system 1 is arranged. In this case, the communication part 140 can acquire the environmental information from an indoor environment management server that manages an indoor environment, or from at least one sensor device for sensing an environmental condition in an indoor space in which the input system 1 is arranged, for example, a device such as a thermometer or a hygrometer.

When environmental information items related to the magnitude of surge energy is acquired in step S200, the control part 100 controls the artificial intelligence part 130 to predict the magnitude of surge energy according to currently acquired environmental information based on a pre-trained search prediction model (S302). Furthermore, when the magnitude of the surge energy is predicted through the artificial intelligence part 130, a first threshold value corresponding to the predicted magnitude of the surge energy can be determined (S304). Furthermore, when the first threshold value is set, the control part 100 can limit the output activation according to the activation of the output part 120 until the accumulated counting value of the first counter 101 reaches the first threshold value when an input is detected from the receiving part 110.

For example, in the case of an environment in which surges are likely to occur frequently, such as when humidity is high, ventilation is insufficient, or temperatures are high, a surge with high energy is more likely to occur due to the superposition of complex surges. Meanwhile, in the case of a surge with high energy, it takes a longer time period for decay, so the control part 100 can set the first threshold value to have a larger value.

On the other hand, in the case of an environment in which the probability of surges occurring is low, such as when humidity is low, ventilation is sufficient, or temperature is low, the likelihood of a surge with high energy occurring can be lower to the extent that the probability of surge occurrence is low. Accordingly, the control part 100 can set the first threshold value to have a smaller value.

Meanwhile, the operation process of FIG. 3 can be performed at predetermined time intervals. That is, new environmental information can be collected at the predetermined time intervals, and a new first threshold value can be set based on the newly collected environmental information. For example, the operation process of FIG. 3 can be performed at a set time every day, and in this case, a first threshold value can be newly set according to the magnitude of the surge energy predicted according to the weather or indoor environmental conditions of that day.

Meanwhile, although only the first threshold value was mentioned in the foregoing description, not only the first threshold value but also the second threshold value of the second counter 102 can of course be changed according to the control of the control part 100. That is, the control part 100 can change the first threshold value as well as change the second threshold value in the step S304.

In the foregoing description, an operation process of the surge prevention device 10 according to an embodiment of the present disclosure has been described. Hereinafter, examples of limiting or activating, by the surge prevention device 10 according to an embodiment of the present disclosure, a digital input for each case in which a surge occurs, an AC input signal is applied, and a DC input signal is applied will be described in more detail.

In the following description, an ON_CNT graph 600 is a graph showing a change in counting value of the first counter 101, and an OFF_CNT graph 700 is a graph showing a change in counting value of the second counter 102. Furthermore, a digital input graph 500, which is a graph showing a valid value in a low state, that is, a state in which a voltage is 0, can show that a voltage signal that can be considered as an input signal has been detected when the voltage is 0. In addition, an output graph 800, which is a graph that indicates a valid low state, is a graph that indicates a state in which the output of the input signal is activated when the voltage is 0, and a state in which the output of the input signal is deactivated when the voltage is not 0. Furthermore, an input signal graph 400 is a graph showing a voltage detected as an input to the surge prevention device 10 of the present disclosure.

FIG. 4 is an exemplary diagram showing an example of processing, by the surge prevention device 10 according to an embodiment of the present disclosure, a voltage due to a surge that has occurred as an invalid input.

Referring to FIG. 4, when a signal having a voltage above a specific voltage, that is, a surge, is detected (input graph 400), the value of the first counter 101 can gradually increase as the voltage continues to be detected, as shown in the ON_CNT graph 600 of FIG. 4. Furthermore, while voltage detection continues, the counting value of the first counter 101 can be continuously increased, and when the counting value of the first counter 101 reaches a preset first threshold value, it can be held as shown in the ON_CNT graph 600 of FIG. 4.

Meanwhile, contrary to the ON_CNT graph 600, when a voltage (input graph 400) is detected, the value of the second counter 102 can be initialized as shown in the OFF_CNT graph 700. Furthermore, as the voltage continues to be detected, the second counter 102 can continue to maintain an initialization state.

Here, when the detected signal is a surge as shown in FIG. 4, it has the characteristic of crossing a zero crossing point (ZCP) and having its polarity reversed, and can increase briefly when crossing the ZCP (signal voltage magnitude = 0), but the voltage is detected again as the signal crosses the ZCP so as to allow the second counter 102 to be initialized again. Therefore, as shown in FIG. 4, the second counter 102 can be continuously maintained in an initialized state.

Meanwhile, while the counting value of the first counter 101 reaches the first threshold value to be held, when a voltage above a preset threshold voltage is further detected, the control part 100 can consider the detected signal as a valid input and activate the output part 120 to activate the output of the input signal.

However, in the case of a noise voltage that increases rapidly for a predetermined time period and naturally decays, such as a surge, the voltage is characterized by a rapid decrease in voltage subsequent to detecting a large voltage in the beginning. Therefore, the voltage magnitude can naturally decay as a time period elapses until the counting value of the first counter 101 reaches the first threshold value. Accordingly, as shown in FIG. 4, when a signal having a voltage above a preset threshold voltage is not detected after the counting value of the first counter 101 reaches the first threshold value to be held, a state in which a digital input is deactivated can be maintained as shown in the output graph 800 of FIG. 4.

Meanwhile, when the voltage of the detected signal is below the threshold voltage, the value of the second counter 102 can be increased. Therefore, in the case of a surge (input graph 400) that naturally decays over time as shown in FIG. 4, the second counter 102 maintains an initial state for a time period when a large voltage is detected in the beginning, and then the counting value of the second counter 102 can be continuously increased after a time point at which the voltage detected due to natural decay decreases to below the threshold voltage.

Furthermore, when the counting value of the second counter 102 reaches a preset threshold value (second threshold value), the control part 100 can initialize the first counter 101 as shown in the ON_CNT graph 600. Therefore, when a noise voltage such as a surge occurs, the surge prevention device 10 can deactivate the output part 120 to limit the output of the input signal even though the signal has a voltage above a specific voltage.

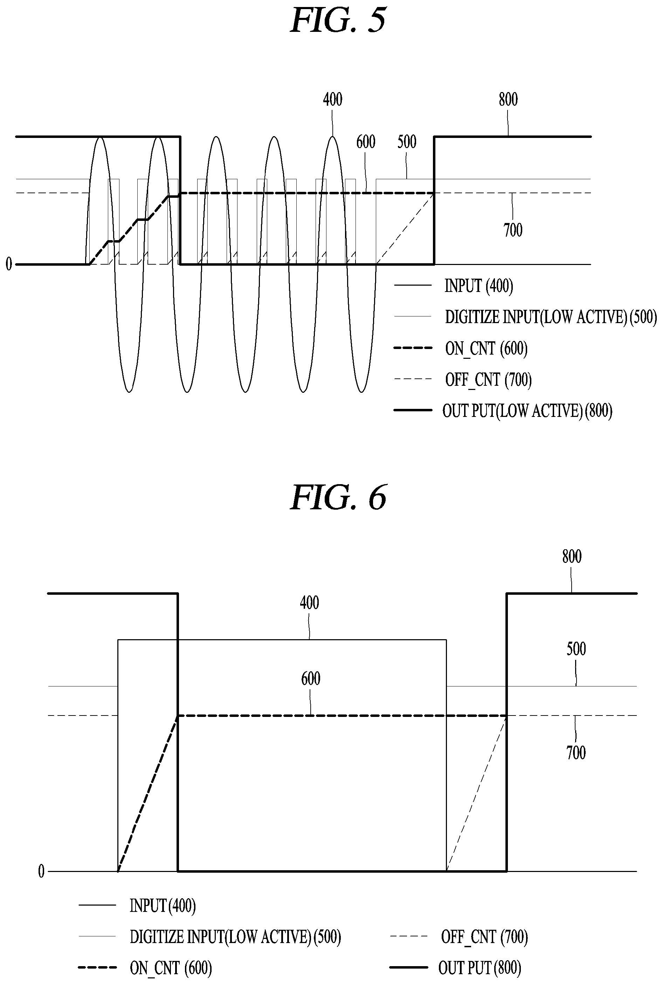

Meanwhile, FIG. 5 is an exemplary diagram showing an example of processing, by the surge prevention device 10 according to an embodiment of the present disclosure, an AC input signal as an input signal in an AC input device.

In the case of an AC input signal, as shown in the input signal graph 400 in FIG. 5, it can be a signal having its voltage polarity reversed while passing through a ZCP at predetermined time periods. In the case of such an AC input signal, as shown in the digital input graph 500 of FIG. 5, a signal above a specific voltage can be detected as pulse-shaped input signals that are consecutively repeated at predetermined time intervals.

Meanwhile, since the first counter 101 is an accumulation counter, when such a pulse-shaped input signal is detected, the voltage increases when a signal above a specific voltage is detected, and its state can be maintained when no signal is detected. Therefore, when the AC input signal is input for a predetermined time period or more, the counting value of the first counter 101 can be increased step by step, as shown in FIG. 5, according to the signals detected intermittently and consecutively. Furthermore, when the counting value of the accumulated first counter 101 reaches a preset first threshold value, it can be held as shown in the ON_CNT graph 600 of FIG. 5.

Meanwhile, since the second counter 102 is a counter that is initialized when there is an input and increased when there is no input, when a pulse-shaped input signal according to the AC input signal is detected, its value can be increased when no voltage is detected. However, since it is initialized again when a voltage is detected, as shown in the OFF_CNT graph 700 of FIG. 5, when a pulse-shaped input signal according to the AC input signal continues, the process of increasing and then initializing the voltage of the second counter 102 can be repeated.

Meanwhile, when the detected signal is a valid input signal, as shown in FIG. 5, a signal above a specific voltage can be received even after a time point at which the counting value of the first counter 101 reaches the first threshold value. Then, the control part 100 can activate the output part 120 so as to allow a valid input signal to be output. Accordingly, as shown in the output graph 800 of FIG. 5, the output of the input signal can be activated from a time point at which the counting value of the first counter 101 reaches the first threshold value.

Meanwhile, when a pulse-shaped input signal according to the AC input signal continues, the process of increasing and then initializing the counting value of the second counter 102 as described above can be repeated. However, when the input of the input signal is completed and the reception of the pulse-shaped input signal according to the AC input signal is stopped, the initialization of the second counter 102 can not be performed.

Accordingly, as shown in the OFF_CNT graph 700 of FIG. 5, the voltage of the second counter 102 can be gradually increased while the output is activated (a state in which the output graph 800 has a value of 0).

Furthermore, when the accumulated counting value of the second counter 102 reaches a preset second threshold value, the control part 100 can initialize the first counter 101. Furthermore, when the first counter 101 is initialized, the output part 120 can be switched back to a deactivated state. Therefore, when a valid input signal is received, as shown in the output graph 800 of FIG. 5, the output part 120 can be activated from a time point at which the counting value of the first counter 101 reaches the first threshold value to a time point at which the counting value of the second counter 102 reaches the second threshold value.

FIG. 6 is an exemplary diagram showing an example of processing, by the surge prevention device 10 according to an embodiment of the present disclosure, a DC input signal as an input signal in a DC input device.

In the case of a DC input signal, unlike the foregoing AC input signal, it can be a signal in which a voltage above a specific voltage is continuously applied. Accordingly, as shown in the input graph 400 in FIG. 6, a voltage above a specific voltage can be continuously applied for a predetermined time period.

Referring to FIG. 6, when a signal, that is, an input signal, above a specific voltage is detected as shown in the input graph 400, the counting value of the second counter 102 can be initialized and at the same time, the counting value of the first counter 101 can be gradually increased, as shown in the OFF_CNT graph 700 and ON_CNT graph 600. Furthermore, while the input signal continues, it can increase continuously so as to allow the counting value of the first counter 101 to reach the first threshold value.

When the counting value of the first counter 101 reaches the first threshold value, the control part 100 can hold the first counter 101. Furthermore, it is possible to detect whether there is an input signal having a voltage above the specific voltage, that is, a preset threshold voltage. Furthermore, the output part 120 can be activated depending on whether there is an input signal having a voltage above the threshold voltage.

Accordingly, as shown in FIG. 6, when a valid input signal, that is, a signal having a voltage above the threshold voltage, is continuously applied, the output part 120 can be activated so as to allow the output of the valid input signal from a time point at which the counting value of the first counter 101 reaches the first threshold value. In this case, since the input signal is still in a sustained state, the second counter 102 can maintain an initialized state.

In this state, when the input of the valid input signal is stopped, that is, when a voltage above the threshold voltage is not detected, the counting value of the second counter 102 can start to increase. Furthermore, when the counting value of the second counter 102 reaches a preset second threshold value, the control part 100 can initialize the first counter 101. Furthermore, at the same time, the output part 120 can be switched back to a deactivated state so as to limit the output of the output part 120. Accordingly, when a valid input signal is received, the output part 120 can be activated from a time point at which the counting value of the first counter 101 reaches the first threshold value to a time point at which the counting value of the second counter 102 reaches the second threshold value, as shown in the output graph 800 of FIG. 6. Furthermore, when the counting value of the second counter 102 reaches the second threshold value, the output part 120 can be deactivated again.

As such, according to the present disclosure, two accumulation counters (the first counter 101 and the second counter 102) can be used, thereby preventing a malfunction of the processing part 30 due to a surge from being performed by distinguishing the surge from a valid input as well as using both an AC input signal and a DC input signal.

Meanwhile, in the foregoing description of the present disclosure, specific embodiments have been described, but various modifications can be made without departing from the scope of the present disclosure. In particular, in an embodiment of the present disclosure, it has been described as an example of acquiring environmental information from an external server or another sensor device through the communication part 140, but on the other hand, the surge prevention device 10 can directly include at least one sensor device, such as a thermometer, hygrometer, or airflow meter, so as to directly detect the occurrence of a surge and at least one environmental factor that can affect the surge energy when the surge occurs. In this case, the magnitude of the surge energy can of course be estimated based on the sensing values detected by the at least one sensor device without acquiring environmental information through the communication part 140.

In addition, in the foregoing description, it has been described as an example in which the surge prevention device 10 according to an embodiment of the present disclosure includes the artificial intelligence part 130 that includes the surge prediction model 131.

Meanwhile, the trained surge prediction model 131 can be trained on a preset external server capable of communicating with the surge prevention device 10, for example, a machine learning server. In this case, the machine learning server can periodically train a surge prediction model and distribute the trained surge prediction model to a plurality of different surge prevention devices 10 communicated with the machine learning server. By separating the training function from the surge prevention device 10 in this manner, the software burden of each surge prevention device 10 can be significantly reduced.

As an example, when a surge prediction model trained in this way is distributed from a preset machine learning server, the artificial intelligence part 130 provided in each surge prevention device 10 can perform only a function of inputting environmental information into the distributed surge prediction model 131 and producing a result thereof. In this case, the control part 100 can take over the role of the artificial intelligence part 130, and the surge prediction model 131 can be stored in the memory of the surge prevention device 10 instead of the artificial intelligence part. That is, it can not be provided with the artificial intelligence part 130.

The foregoing present disclosure can be implemented as codes readable by a computer on a medium written by the program. The computer-readable media includes any type of recording device in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (e.g., transmission over the Internet). Additionally, the computer can include the control part 100 of the surge prevention device 10. Therefore, the detailed description should not be limitedly construed in all of the aspects, and should be understood to be illustrative. The scope of the present disclosure should be determined by the reasonable interpretation of the appended claims, and all changes within the equivalent scope of the present disclosure are included in the scope of the present disclosure.

## Claims

1. A surge prevention device arranged between an input part that receives an input and a processing part that processes the input, the device comprising:
a first counter in which a counting value is accumulated whenever a signal above a preset specific voltage is detected from the input part;
a second counter in which a counting value is accumulated at preset time periods when a signal below the specific voltage is not detected from the input part, and is initialized when a signal above the specific voltage is detected; and
a control part that controls the first counter so as to allow the counting value of the first counter to be held when the counting value accumulated in the first counter reaches a preset first threshold value, and activates an output part to output an input signal to the processing part when a signal having a voltage above a preset threshold voltage is detected while the counting value of the first counter is held.

2. The device of claim 1, wherein the control part deactivates the output part to limit an input signal output to the processing part when the counting value of the second counter reaches a preset second threshold value while the counting value of the first counter is held.

3. The device of claim 2, wherein the control part initializes the first counter when the accumulated counting value of the second counter reaches a preset second threshold value.

4. The device of claim 1, wherein the control part changes the first threshold value to vary a time period required for the counting value of the first counter to reach the first threshold value so as to vary a time period until the output part is activated subsequent to detecting a signal above the specific voltage.

5. The device of claim 4, wherein the control part changes a magnitude of the first threshold value based on a result of collecting environmental information related to a surge around the surge prevention device, and
wherein the environmental information related to the surge comprises:
at least one of temperature, humidity, and an amount of ventilation around the surge prevention device.

6. The device of claim 5, wherein the control part predicts a magnitude of surge energy that can be generated when a surge occurs based on environmental information related to the surge, and changes the magnitude of the first threshold value based on the predicted magnitude of the surge energy.

7. The device of claim 6, wherein the surge prevention device further comprises:
a communication part capable of communicating with a preset external server,
wherein the control part predicts the magnitude of the surge energy from the environmental information related to the surge based on a pre-trained surge prediction model capable of predicting the magnitude of surge energy at the time of surge occurrence based on the environmental information related to the surge, and
wherein the surge prediction model is received from a machine learning server connected through the communication part.

8. The device of claim 7, wherein the control part collects the environmental information related to the surge from at least one external server connected through the communication part.

9. The device of claim 1, wherein the input part is a DC input part that inputs a DC input signal in which a voltage having a predetermined magnitude is continuously applied for a predetermined time period, and
wherein the processing part is a DC input processing part that receives the DC input signal as an input signal to perform a corresponding function.

10. The device of claim 1, wherein the input part is an AC input part that inputs an AC input signal in which voltages of opposite polarities alternate at predetermined time intervals, and
wherein the processing part is an AC input processing part that receives the AC input signal as an input signal to perform a corresponding function.

11. An input system, comprising:
an input part that outputs an input received from a user or another device as an input signal having a specific voltage;
a processing part that performs, upon receiving an input signal, processing according to the received input signal; and
a surge prevention part arranged between the input part and the processing part to activate, when a signal above a preset specific voltage is detected from the input part, a deactivated output part to output the input signal to the processing part,
wherein the surge prevention part delays, when a signal above the specific voltage is detected, a time point at which the output part is activated based on an accumulated time period for which a signal above the specific voltage is detected or a counting value that counts a number of times a signal above the specific voltage is detected.

12. The input system of claim 11, wherein the surge prevention part comprises:
a first counter in which a counting value is accumulated whenever a signal above a preset specific voltage is detected from the input part;
a second counter in which a counting value is accumulated at preset time periods when a signal below the specific voltage is not detected from the input part, and is initialized when a signal above the specific voltage is detected; and
a control part that controls the first counter so as to allow the counting value of the first counter to be held when the counting value accumulated in the first counter reaches a preset first threshold value, and activates the output part when a signal above the specific voltage is detected from the input part while the counting value of the first counter is held.

13. The input system of claim 12, wherein the surge prevention part deactivates, when the accumulated counting value of the second counter reaches a preset second threshold value while the counting value of the first counter is held, the output part.

14. The input system of claim 12, wherein the surge prevention part maintains, when a signal above the specific voltage is not detected from the input part while the counting value of the first counter is held, the output part in a deactivated state.

15. The input system of claim 12, wherein the surge prevention part initializes, when the accumulated counting value of the second counter reaches a preset second threshold value, the first counter.

16. The input system of claim 12, wherein the input part is a DC input part that inputs a DC input signal in which a voltage having a predetermined magnitude is continuously applied for a predetermined time period, and
wherein the processing part is a DC input processing part that receives the DC input signal as an input signal to perform a corresponding function.

17. The input system of claim 12, wherein the input part is an AC input part that inputs an AC input signal in which voltages of opposite polarities alternate at predetermined time intervals, and
wherein the processing part is an AC input processing part that receives the AC input signal as an input signal to perform a corresponding function.
